# EUROPEAN PATENT SPECIFICATION

(11) **EP 1 753 299 B1**
(45) Date of publication and mention of the grant of the patent: **07.09.2011**
(21) Application number: 05742581.1
(22) Date of filing: 06.05.2005
(51) Int. Cl.: A23D 9/02, A23L 1/03

(54) **FOOD PRODUCT**
NAHRUNGSMITTELPRODUKT
PRODUIT ALIMENTAIRE

(30) Priority: 07.05.2004 US 840276; 30.11.2004 US 998539
(43) Date of publication of application: 21.02.2007
(73) Proprietor: Coavel Inc., Guelph, ON N1E 3Y1 (CA)
(72) Inventor: MARANGONI, Alejandro, Guelph, Ontario N1G 2X8 (CA); IDZIAK, Stefan, Waterloo, Ontario N2J 4M7 (CA)
(74) Representative: Fleuchaus, Andrea
(86) International application number: PCT/CA2005/000692
(87) International publication number: WO 2005/107489

(56) References cited:
- CA-A1- 2 126 483
- CA-A1- 2 171 763
- CA-C- 2 048 401
- US-A1- 2002 034 577

## Description

### FIELD OF INVENTION

The present invention relates to products for a healthy lifestyle. In particular, it relates to an oil-based food product that has reduced trans fats and preferably low or virtually no saturated fats.

### BACKGROUND OF THE INVENTION

Triacylglycerols (TAGs) are the main constituent of edible fats and oils. TAGs are composed of three fatty acids esterified onto a glycerol backbone. Fatty acids are usually linear molecules composed of long aliphatic carbon chains that can range from four to twenty-two carbons in length. Fatty acids can be saturated or unsaturated. In a saturated fatty acid each carbon atom is attached to another carbon atom via a single covalent bond. Fats and oils containing predominantly saturated fatty acid are generally solid at room temperature. Examples of saturated fats include animal fat such as milk fat or lard and tropical oils such as palm oil, palm kernel oil and coconut oil. A fatty acid is unsaturated when carbon-carbon double bonds are present within the chain of carbon atoms. A carbon-carbon double bond can adopt one of two conformations, namely cis and trans. Fats and oils containing unsaturated fatty acids with cis double bonds are usually liquid at room temperature. Examples of unsaturated fats include vegetable oils such as soybean, canola, olive and cottonseed oils. Fats and oils containing unsaturated fatty acids with trans double bonds, on the other hand, are solid at room temperature. The difference between a fat and an oil is subtle. Generally, if the melting point of the TAGs is higher than about 30°C, the material is solid at room temperature, and is therefore referred to as a 'fat'. On the other hand, if the melting point of the TAGs is lower than about 15°C, the material will appear liquid at room temperature, and will thus be referred to as an 'oil'. Natural fats and oils are complex mixtures of TAGs with extremely varied chemical compositions.

Unsaturated fatty acids are generally in the cis conformation. However, when an oil is partially hydrogenated, various amounts of the cis form are converted to a more stable trans configuration, and are thus called trans fatty acids. Hydrogenation is a process by which a hydrogen molecule is added to an unsaturated double bond. Hydrogenation is a way of making vegetable oils harden at room temperature. Small particles of nickel or copper catalyst are added and the mix is heated to high temperatures under pressure and agitation for up to eight hours while hydrogen gas is injected. From the time the British patent on liquid phase hydrogenation was issued to Norman in 1903, and its introduction in the U.S. in 1911, few chemical processes have made as great an economic impact on any industry. Hydrogenation opened new markets for vegetable oil based on specialty products. Three reactions take place during hydrogenation - the saturation of carbon-carbon double bonds, the conversion of cis geometric isomers into more stable trans isomers, as well as the creation of new positional isomers, where double bonds are shifted to new positions along the fatty acid chain. Both the saturation of double bonds as well as the cis to trans isomerization of double bonds will result in an increase in the melting point of a fat. Thus, cooling of this hydrogenated fat below the melting point of the newly created triacylglycerol species containing saturated and trans fatty acids, will lead to the partial crystallization of the material. This semisolid fat matrix will therefore be structured as a network of fat crystal aggregates with liquid oil trapped within. The solid-like characteristics of this material are due to this underlying fat crystal network. Without this network of crystallized fat, the material would be an oil.

Manufacturers use the hydrogenation process to convert vegetable oil into a solid form for the manufacture of margarine, shortening and spreads. The process is also used to increase the shelf life and flavor stability of food products containing vegetable oils. During hydrogenation, anywhere from eight to seventy percent of the fatty acid content will be converted to trans fatty acids. The amount of conversion depends on the process and the desired product.

Trans fatty acids also occur naturally. When unsaturated fatty acids are ingested by ruminants (i.e., cows) the fatty acids can be partially hydrogenated by bacteria in the rumen of the animal (stomach) and thus trans fatty acids can be found in milk fat, dairy products, beef and mutton fat. Trans fatty acids usually make up about two to nine percent of the fat in these products. Ruminant animals are not the only animals in which this process occurs. Chicken and pigs often ingest trans fatty acids through the feed they are given and the trans fatty acids make their way into pork and poultry products.

Over the past 50 years hydrogenated oils have become a prevalent part of the diet in developed countries. Margarine and shortenings are examples of products that contain hydrogenated oils and they are among the most common sources of hydrogenated oil in our diets. These hydrogenated oils have become so commonplace in prepared foods that it is a major feat to avoid them. Margarine is sometimes marketed as a healthy alternative to saturated fats like butter and lard. However while these products start out as unsaturated oils, the final product includes trans fatty acids that are increasingly under attack as major contributors to cardiovascular disease.

New research into the role fats and oils play in human health has indicated that consumption of trans fatty acids is associated with increased incidences of cancer, heart disease, elevated cholesterol levels and a host of other health problems. Over ten years of clinical and epidemiological research suggest that there is a positive linear relationship between trans fatty acid intake and a decrease in serum HDL ('good' cholesterol) combined with an increase in serum LDL ('bad' cholesterol). These combined effects increase the risk of coronary heart disease. Both the institute of Medicine and the American Heart Association recommend a reduction in the intake of trans fatty acids, and to preferably eliminate them altogether from the diet. This is difficult to achieve without proper labeling of foods. Prompted originally by the Center for Science in the Public Interest back in 1994, the U.S. Food and Drug Administration (FDA) has decreed that, as of January of 2006, food manufacturers must include the trans fatty acid content in product labels.

Long before the health risks associated with trans fatty acids were realized, it was known that consumption of animal fats and tropical oils had a negative effect on cardiovascular health. The American Heart Association (AHA) discourages the consumption of animal fats such as butter (milk fat), lard (pig fat), tallow (beef fat) due to their relatively high content of cholesterol and saturated fatty acids, which makes them highly atherogenic - they contribute to the build up of cholesterol and other substances in artery walls. The AHA also discourages the consumption of trans fats. Moreover, the AHA also discourages the consumption of tropical oils such as palm oil, palm kernel oil and coconut oil due to their high saturated fatty acid content.

The need for a healthy alternative to trans fatty acids and saturated fats creates technological hurdles for the food manufacturing industry. It is difficult to eliminate trans fats from a food formulation where the goal is to transform an oil, which is liquid at room temperature to a fat, which is 'solid' at room temperature to enhance texture and appearance of a food product.

There have been various attempts in the food industry to provide an edible oil product that is solid at room temperature and that contains little or no trans fatty acids or saturated fats. For example, United States Patent No. 6,569,478 discloses a food composition comprising at least one food ingredient in a monoglyceride mix in an amount sufficient to form a mesomorphic structure which substantially encapsulates the food ingredient and water.

United States Patent No. 6,156,369 discloses a food spread comprising a non-aqueous mixture of an edible oil and a monoglyceride in an amount of from about 85% to about 98% edible oil and from about 2% to about 15% monoglyceride.

Canadian Patent No. 2,096,429 discloses a finished foodstuff comprising bulk regions of a mesomorphic phase of edible surfactant and less than 80 wt% edible oil, and wherein the mesomorphic phase is a continuous phase and/or contains 80 wt% or more of water as well as methods of making and using the foodstuff.
Document WO 03/051135 discloses mixtures of oil and emulsifiers in the production of feell-continuous products.

Much of the effort to create low-trans and saturate fat alternatives has focused on the use of monoglyceride gels. The early work on monoglyceride gels focused on aqueous lyotropic systems only. When heated above their 'Kraft' temperature, monoglycerides and other amphiphillic molecules, can form lamellar phases structured as alternating layers of monoglyceride bilayers and water. Upon cooling, monoglycerides will crystallize into kinetically favored, but thermodynamically metastable forms, yielding an alpha-gel. This alpha-gel is structured in a similar fashion as the lamellar phase - water layers sandwiched between monoglyceride bilayers. Upon ageing, alpha-gels tend to rearrange into beta-gels, or coagels, upon transformation of monoglyceride crystals into more thermodynamically stable crystal forms. In these coagels, however, water layers are squeezed out of the gel structure, leaving behind stacked monoglyceride bilayers.

These mesophases (alpha-gels and coagels) were the subject of a flurry of research activity. In all of this work, aqueous mesophase gels - usually of water contents greater than 80% - were mixed with a variety of materials for structuring purposes. Under vigorous mixing (high shear), aqueous mesophase gel material was dispersed within other phases until some kind of stabilization was achieved. This method of making monoglyceride gels limited this technology to the manufacture of low-fat edible spreads. Monoglycerides can also be used to structure pure oil, but in that case, monoglycerides are used as a conventional hardstock, and not as a mesophase gel as described in United States Patent No. 6,156,369.

Using standard techniques of blending, interesterification (chemical and enzymatic) and fractionation, it is virtually impossible to produce a spread having the texture of a tub-type margarine without incorporating saturated fats and/or trans fatty acids. Thus, there has long been an unmet need for alternative technologies to provide a product that has the consumer desired features of texture and spreadability without harmful trans fats, animal fats and tropical oils.

### SUMMARY OF THE INVENTION

The present invention provides a new strategy for the manufacture of a product having the properties of a plastic fat without the addition of traditional saturated and trans fat hardstocks (blending). The present invention does not require chemical or enzymatic interesterification or fractionation.

The present invention provides novel food products that are oil-based and have a fat-like (i.e. plastic solid) consistency yet contain low levels of trans and saturated fatty acids. This consistency is achieved through the formation of a cellular solid. The cellular solid is a matrix of large cells having crystalline walls that can compartmentalize components of the food product.

In one aspect of the invention, a process for the preparation of a cellular solid is provided. The process comprises the steps according to claim 1, namely
a. preparing an oil phase solution of about 3-40% (w/w) surfactant in oil, wherein the surfactant comprises an ionic and a non-ionic surfactant, by heating the solution to a temperature at which the surfactant melts in the oil;
b. preparing a heated aqueous phase solution by heating the solution to about the temperature of the heated oil phase solution according to a.);
c. combining the aqueous phase solution and the oil phase solution to form an oil/surfactant/aqueous composition;
d. mixing the composition; and
e. allowing the composition to cool, wherein the surfactant crystallizes upon cooling to form a cellular solid.

In a preferred embodiment, the oil phase solution comprises a non-ionic surfactant. In another preferred embodiment, the oil phase solution comprises about 3% to 40% (w/w) of surfactant. Various types of vegetable, fish, algae and other oils can be used.

The aqueous phase solution is typically alkaline, deionized or distilled water. The aqueous phase may contain an additive selected from the group consisting of a polysaccharide, protein, flavoring, salt, sugar, vitamin, spice and combinations thereof.

In another embodiment, the process of the invention comprises the further step of whipping the composition.

In another aspect of the invention, a cellular solid comprising an oil/surfactant/water cellular solid matrix composition is provided. The cellular solid comprises condensed surfactant cell walls that are formed by combining a surfactant-containing oil phase with an aqueous phase. Typical surfactants include monoglycerides, diglycerides, poly-glycerol esters, non-ionic phospholipids and mixtures thereof and the final composition typically comprises about 3% to 10% w/w of a non-ionic surfactant.

The non-ionic surfactant is preferably selected from the group consisting of monoglycerides, diglycerides, poly-glycerol esters, non-ionic phospholipids, sterols and mixtures thereof. The food product typically comprises at least 3% of the non-ionic surfactant, preferably about 4% to 10%.

Preferred ionic surfactants are selected from the group consisting of cationic phospholipids, cationic non-fatty carboxylic acid esters, anionic lactylated fatty acid salts, anionic phospholipids, anionic non-fatty carboxylic esters, fatty acids and their metal salts. More preferred ionic surfactants are stearic acid, sodium stearyl lactylate (SSL), phosphatidic acid, and diacyl tartaric acid ester of monoglyceride (DATEM). Naturally occurring fatty acids that are contained in the non-ionic surfactant can also act as ionic surfactants in the composition.

The ratio of the non-ionic surfactant to ionic surfactant is preferably in the range of 10:1 to 30:1, most preferably about 20:1.

In a preferred embodiment, a cellular solid of the invention comprises about 3% to 10% monoglyceride, about 0.2% to 0.35% anionic surfactant, and the mass balance remaining comprising 20% to 80% w/w oil and 20% to 80% water.

The present invention also provides a food product comprising an oil/surfactant/water cellular solid matrix. Typical food products of the invention include spreads, dips, toppings, dairy-like products, fillings for cookies, confections, pastries and the like.

Virtually any edible oil can be used in the preparation of the food product. Preferred oils for use in the invention are vegetable oils such as soybean oil, sunflower oil, canola oil, rapeseed oil, hazelnut oil, corn oil, peanut oil, olive oil, rice bran oil, safflower oil and flaxseed oil. Vegetable oils that are low in saturated fatty acids are preferred. Other oils, such as fish, algal or fungal oils, may be used to provide the beneficial effects of omega fatty acids. Oils derived from animal fats by fractionation may also be used. The oil is present in the food product in an amount of about 20% to about 80%, preferably 40% to 60%.

The food product comprises from about 10% to about 80% water, preferably about 20% to 60%, more preferably 40% to 60%.

In one preferred embodiment, the food product comprises about 4% to 7% monoglyceride, about 0.2% to 0.35% anionic surfactant, with the balance of the mass comprised of about 40% to 60% oil and about 40% to 60% water.

In a preferred embodiment, the product has the properties of a plastic fat or spread, such as margarine and shortening, in terms of texture and spreadability. The components and steps of the process can be adjusted to provide different consistencies such as a whipped topping or a mayonnaise.

In a preferred embodiment, the food product is selected from a margarine-like spread, flavored spreads including low fat spreads, dressings, dips, beverages and mayonnaise type products. Dairy products, incorporating the cellular solid matrix, such as ice cream and ice milk, whipped toppings, yogurt, soft cheeses, milk and cream substitutes are also included within the scope of the invention.

In another aspect, a whipped topping comprising a cellular solid as described above is provided. The whipped topping includes air pockets dispersed within the cellular solid.

In a preferred embodiment, the whipped topping includes a sweetener such as sugar, Splenda or aspartame. Other sweeteners not specifically mentioned here can also be used to impart a sweet flavor to the whipped topping. In one embodiment, the whipped topping comprises at least 5%, more preferably at least 20% sugar.

### BRIEF DESCRIPTION OF THE DRAWINGS

Further objects, features and advantages of the invention will be readily apparent from the detailed description that follows and reference to the accompanying drawings, wherein:

Figure 1A is a polarized light micrograph of a composition of the present invention comprising 50% w/w of the aqueous phase;

Figure 1B is a polarized light micrograph of composition of the invention comprising 40% w/w of the aqueous phase;

Figure 2 illustrates a Nile Red stained sample of a composition according to the present invention;

Figure 3 illustrates a Coumarin-stained sample of a composition according to the present invention;

Figure 4 illustrates a powder X-ray diffraction pattern of a structured composition of the present invention;

Figure 5 is an enlarged normalized X-ray diffraction pattern of structures containing different amounts of water;

Figure 6 demonstrates graphically the results of dynamic rheological studies on various compositions; and

Figure 7 illustrates air bubbles in a sample of a composition.

### DETAILED DESCRIPTION

The present invention provides a novel, cellular solid matrix that is useful for the structuring of edible oil food products. The food product is typically a spread, filling or topping that has the qualities of temperature cycling stability, spreadability and texture required by consumers. The cellular solid matrix of the present invention can also be used to structure other oil-based products such as coatings, barrier films, capsules for pharmaceutical ingredients, lotions, creams and carriers.

The cellular solid matrix is formed by combining an oil phase solution and an aqueous phase solution. The oil phase solution comprises a surfactant in oil stock solution. Various types of oils can be used. This includes various types of vegetable oil, fish oil, algae oil, and animal oils. Examples of vegetable oils include corn, canola, rapeseed, hazelnut, soybean, peanut, palm, flaxseed, olive, safflower, sunflower, rice bran and all other types of vegetable oils. To reap the most health benefits, it is preferable to use a vegetable oil that is low in saturated fatty acids. In certain circumstances, however, it may be desirable to use a tropical oil, which does include some saturated fatty acids. A fish oil, algae oil or other oils are useful in the invention to incorporate the healthy long-chain omega-3 fatty acids that are contained therein.

The oil phase solution typically contains about 3% to 30%, preferably about 4% to 15% w/w of a surfactant. A non-ionic surfactant is typically used. Various types of non-ionic surfactants known to those skilled in the art can be used in the present invention. Monoglycerides, diglycerides, poly-glycerol esters, non-ionic phospholipids and mixtures thereof are some examples of useful surfactants.

The surfactant component may contain only non-ionic or both non-ionic and ionic surfactants. For example, the surfactant component may comprise a 10:1 to 30:1 ratio of non-ionic to ionic surfactant, preferably about 20:1. Some examples of ionic surfactants that are useful in the present invention include cationic phospholipids, cationic non-fatty carboxylic acid esters, anionic lactylated fatty acid salts, anionic phospholipids, anionic non-fatty carboxylic esters, fatty acids and their metal salts. Naturally occurring free fatty acid contaminants can also act as an ionic surfactant. Specific ionic surfactants are stearic acid and its sodium salt, sodium stearoyl lactylate (SSL), phosphatidic acid, and diacyl tartaric acid ester of monoglyceride (DATEM). It is clearly apparent to one skilled in the art that other ionic surfactants not specifically mentioned herein could also be used. It is also apparent that small amounts of residual ionic surfactant may be present naturally.

The aqueous solution comprises water. The water may be derived from a variety of sources. It may be deionized and/or distilled and it may be buffered or not. The water may include colorings and/or flavorings and other additives such as stabilizers or sugars. Other types of aqueous solutions include syrup, juice, saline, etc. Alkaline, deionized water is preferred but it is not a requirement that the water be treated in this way.

The surfactant concentration of the oil phase stock solution can vary, but the amount of non-ionic surfactant in the final product is preferably in the range of about 3% to 10%. For example, a 10% stock solution can be prepared which contains 10 grams of a solid surfactant such as monostearin, 0.5 grams of an ionic surfactant such as sodium stearic acid or stearoyl lactylate (SSL) and 89.5 grams of oil. If 60 mls of this stock solution were combined with 40 mls of an aqueous solution, the final product will contain 6% of the monoglyceride. If a 20% stock solution were used, then 40 mls of the stock solution combined with 60 mls of water would achieve the same final monoglyceride concentration. A 10% stock solution has been found to be economical and easy to use. Aiming for a final monoacylglyceride concentration of about 3% to about 10%, preferably about 4% to about 8% has been found to be useful for the structuring of a spreadable food product. A final monoglyceride concentration of 4% to 8% results in a food product having the desirable features of texture, meltability and stability. The present invention provides the first description of a semi solid food product made entirely from vegetable oil, containing no trans fats, and no saturated animal fats or tropical oils.

In one aspect of the present invention, a process for the preparation of a cellular solid is provided. An oil phase stock solution is heated to a temperature where the surfactant melts in the oil. For example, monoacylglycerol can be added to a vegetable oil and heated until it melts. The temperature to which the stock solution is heated depends on the melting point of the solution. It is usually in the range of about 30°C to 100°C, preferably about 50°C to 90°C.

The oil phase solution is combined with an aqueous phase solution. The oil phase may be added to the aqueous phase or the aqueous phase may be added to the oil phase. In one preferred embodiment, the oil phase is heated above the melting temperature of the surfactant/oil mixture and the aqueous phase is heated to approximately the same temperature. The heated oil phase is added to the heated water phase. About 70'C has been shown to be an effective temperature for certain compositions while 85'C has been shown to be effective for other compositions. It is clearly apparent that the optimal temperature will vary according to the specific components used.

In another preferred embodiment, the aqueous phase is added to the oil phase.

Additional components may be included in the preparation of the cellular solid of the invention. For example, sugars such as sucrose, maltose, glucose, fructose, dextrins, maltodextrins, cyclodextrins, as well as corn syrup, high fructose corn syrup, starch (amylose, amylopectin) and modified starches (starch derivatives), dextran, cellulose (microcrystalline and amorphous), methylcellulose, hydroxypropylcellulose, xanthan gum, agarose, and galactomannans (guar gum, locust bean gum) may be included. Other polysaccharides or proteins can also be added. Salt can also be included in the composition. In one preferred embodiment, at least 5% w/w of sugar is added. In another embodiment, about 0.05% to 5% w/w, preferably about 0.5% w/w, of salt is added.

Some preferred additives impart a buttery, salty, sweet, chocolate, vanilla, caramel, mocha, spicy or fruit flavor. For example, it may be desirable to add salt to a margarine-like spread. Cinnamon or garlic or other spices could also be added to a spread comprising a cellular solid matrix. It may also be desirable to add a flavoring to a filling or topping. The additional components and flavorings can be added before or after the aqueous phase is combined with the oil phase. For certain components, it is preferable to add them after the aqueous and oil phases have been mixed and the cellular matrix has begun to form. For other components, it is preferable to add them to the aqueous phase or to the oil phase before they are combined.

The relative amounts of the aqueous phase and the oily phase can vary. Good results are obtained when the combined composition comprises about 20% to 80% of the oily stock solution and conversely 80% to 20% of an aqueous solution. In a preferred embodiment, the aqueous phase and oily stock solution are present in approximately equal portions of each. For example, the combined composition could contain 40% oily stock solution and 60% water, 50% stock solution and 50% water or 60% stock solution and 40% water. During the process, the surfactant, such as monoacylglycerol, crystallizes and forms cell walls. These cells entrap oil in their lumen.

In a preferred embodiment, the combined composition is mixed thoroughly and sheared while preferably slightly above the approximate melting point of the surfactant. The cellular solid structure is then formed.

The present invention provides food products comprising a cellular matrix as described herein. The food products of the invention may optionally include other components such as colorants and additional nutrients. For example, beta-carotene and/or vitamins, including fat-soluble vitamins, can be added. Beta carotene provides both color and health benefits. Vitamins also provide health advantages to the food products. The food products may also include salt, sugar and other flavorings.

Some examples of food products according to the present invention include spreads, dairy-like products and confectionary products. A margarine-like spread according to the invention may or may not include salt. The invention also includes other types of spreads, such as vegetable, nut or cheese spreads that comprise a cellular solid. Dairy-like products, such as a whipped consistency topping, may or may not include sugar and other flavorings. Other types of dairy-like products include yogurt-like snacks, shakes and frozen desserts. Confectionary products include cookies, cakes, crackers, pies (including savory products), puddings, candies, etc. that include a cellular solid matrix in at least one component.

A preferred creamy topping according to the present invention typically comprises a final monoglyceride concentration of about 2% to 10% preferably about 4% to 8%. In one preferred embodiment, air is introduced into the cooled composition by whipping for a few minutes. This decreases the density and provides a fluffy topping. It is clearly apparent that once air is introduced into the composition the concentration or density of the monoglyceride will be more dispersed. In a preferred embodiment, the aqueous phase comprises about 5% to 40% w/w sugar.

In another preferred embodiment, a sweet, flavored product is made without whipping. Desserts which resemble puddings are also included.

A preferred spread according the invention is prepared using an aqueous phase that includes salt. The aqueous phase comprises from about 0.05% to 5% w/w salt, preferably about 0.1% to 3% w/w salt, more preferably about 0.1 % to 1.5% w/w salt. The oil phase and the aqueous phase are heated. The oil phase is added to the aqueous phase to form a cellular solid matrix.

The present invention provides the first example of a cellular solid formed by melting a surfactant in oil to form an oil phase solution and then combining it with an aqueous solution. There is no need to add any hardstock to structure the product and there is no conversion of cis fatty acids into trans fatty acids. Thus, a novel, heart healthy product can be achieved which has the characteristics of taste and texture desired by consumers without the harmful components. The products of the present invention are useful as low calorie spreads, margarine-like spreads, shortening, dairy-like toppings, creamy fillings for cookies, confections, pastries, puddings, ice cream and the like.

In the process and product of the present invention, a cellular solid matrix is formed. Oil is trapped within the cells of the matrix as they are formed. The cellular solid structure of the present invention eliminates the need for hydrogenation of the oil with the concurrent conversion to trans fatty acids.

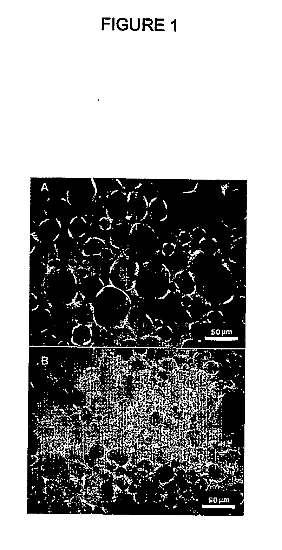

For illustrative, non-limiting, purposes, the cellular solid type of structure of various samples is shown in Figures 1, 2, 3 and 7. These figures are micrographs of samples of various compositions prepared according to the method of the present invention. In some of the figures, the samples have been stained with fat soluble and water soluble stains. It should be clearly understood that these figures are only examples of samples of compositions of the invention. Each composition will have a unique fine structure while maintaining the overall cellular solid type of structure. It is clearly apparent that varying the amount of the oil and the aqueous phase will result in different sized "cells".

Figure 1 shows polarized light micrographs of a cellular solid matrix created by adding (A) 50% (v/v) water and (B) 40% (v/v) water to a 10% monoglyceride-in-oil stock solution. These micrographs demonstrate an increase in cell size as the water content increases to 50% versus 40% (Figure 1A vs. 1B). The microstructure is characteristic of that of a cellular matrix, resembling a foam. The walls are formed by the crystallization or condensation of a multilamellar structure. The walls of the cells interact with each other to form a matrix of cell walls. This results in the formation of a cellular solid structure.

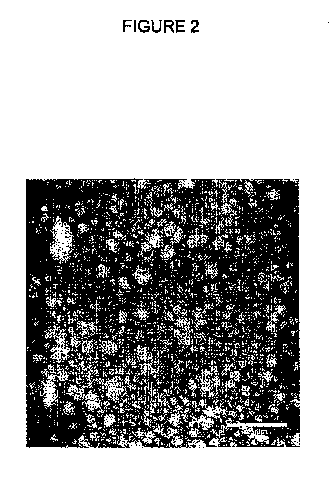

Figure 2 is a micrograph illustrating a sample stained with Nile Red. This is a confocal laser scanning micrograph of a composition prepared using a 60% oil phase containing monoglyceride and SSL and 40% aqueous phase. The stained oil appears as light colored globules.

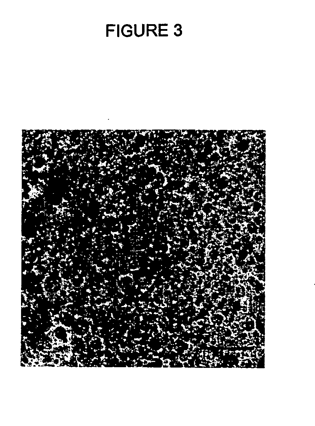

Figure 3 illustrates the same type of composition stained with Coumarin. In this micrograph, the stained aqueous phase appears white in contrast to the unstained oil phase which appears dark.

These examples of compositions of the invention illustrate that monoglycerides dissolved in oil can self-assemble to form a cellular-solid network or matrix.

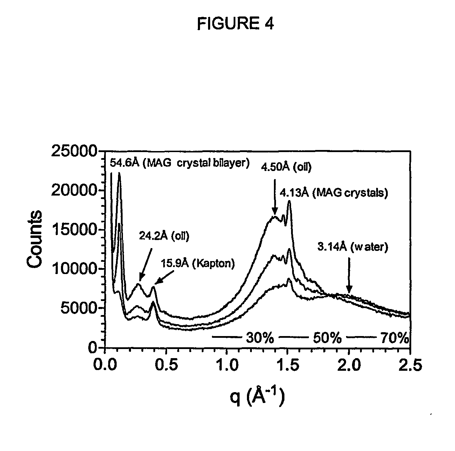

The formation of a cellular solid structure was confirmed by powder X-ray diffraction and the results are shown in Figure 4. The reflection at 54.6 Angstroms corresponds to the size of the crystalline monoglyceride bilayers (the long axis of the unit cell, or the 001 plane). The reflection at 4.13 Angstroms corresponds to the lateral packing of the crystallized monoglyceride fatty acid chains.

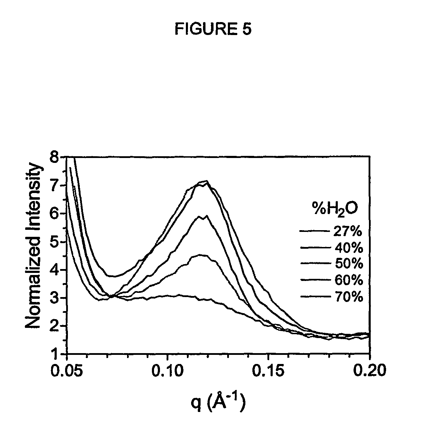

Figure 5 illustrates an enlarged, normalized graph of this region. As more water is added (top to bottom: 27%, 40%, 50%, 60%, 70% water) it can be seen that the peak which corresponds to the size of the spacing in the structure does not increase. This indicates that the structure is stable and an increase in the proportion of water and/or oil does not cause swelling of the cell walls. In other words, water and/or oil is held within the cellular structure, not trapped between lamellar layers. This also demonstrated that this material does not contain liquid crystal mesophases.

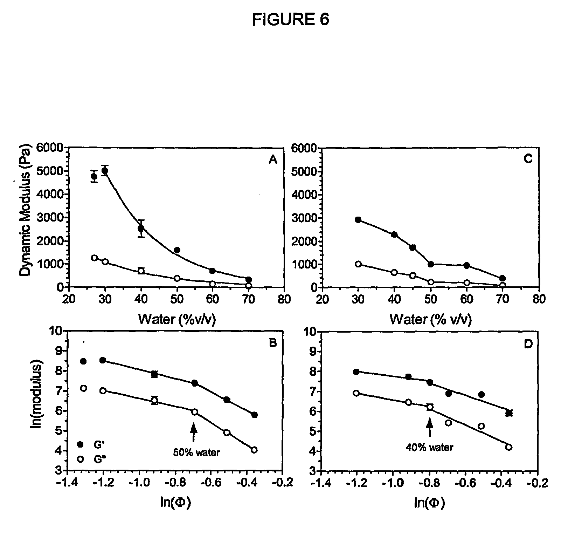

Dynamic rheological studies on the different monoglyceride gels manufactured with vigorous mixing (Figure 6A and 6B) and under gentle mixing (Figure 6C and 6D) showed a decrease in the elastic moduli of the gels as a function of increasing water concentration (Figure 6A and 6C). This is consistent with a predicted decrease in the Young's modulus (E) of a cellular solid with decreases in the volume fraction (Φ) of cell wall material (E∼Φ^{m}). However, a break was also detected at ∼50% (v/v) water in log-log plots of the elastic modulus versus the volume fraction of water (Figure 6B and 6D). This appears to correspond to an abrupt increase in cell size at and above ∼50% water. For cellular solids, an increase in cell size is predicted to lead to a decrease in the elastic modulus. The results are consistent with this prediction, providing further evidence that oil-water mixtures can be structured using monoglyceride-based cellular solids. Sufficient mixing of the phases is required, but once the material starts setting and the cellular matrix forms, it is desirable to keep mechanical input (mixing, shearing, working) to a minimum, or avoid it altogether.

This novel oil structuring process provides for the commercial manufacture of heart-healthy margarines, spreads, and dairy-like products without the use of tropical oils, hydrogenated fats or animal fats.

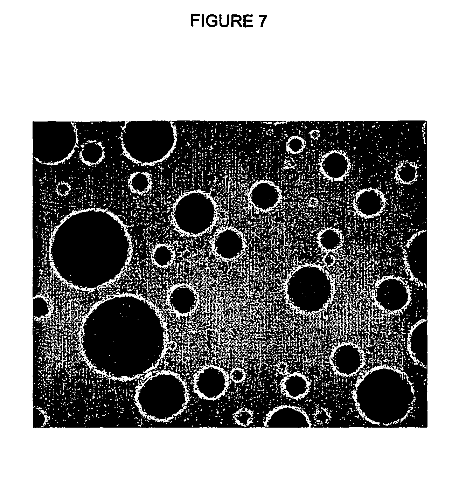

The method of the present invention can also be used to make whipped products that incorporate air pockets. The invention provides for a dairy-like topping that is prepared by whipping the composition to introduce air into the product. Figure 7 illustrates an example of a composition that has air pockets in the structure.

It is clearly apparent that while the description has focused on the development of novel food products, a cellular solid matrix can also be used to structure other oil based products. The cellular solid can be used as barriers, coatings, host/embedding/encapsulating media or structuring media for a diverse range of compounds such as pharmaceuticals and other bioactive compounds such as proteins, membrane proteins, hydrophilic and hydrophobic peptides, as well as diverse preservatives.

The above disclosure generally describes the present invention. It is believed that one of ordinary skill in the art can, using the preceding description, make and use the compositions and practice the methods of the present invention. A more complete understanding can be obtained by reference to the following specific examples. These examples are described solely to illustrate preferred embodiments of the present invention and are not intended to limit the scope of the invention. Changes in form and substitution of equivalents are contemplated as circumstances may suggest or render expedient. Other generic configurations will be apparent to one skilled in the art. All journal articles and other documents such as patents or patent applications referred to herein are hereby incorporated by reference.

### EXAMPLES

Although specific terms have been used in these examples, such terms are intended in a descriptive sense and not for purposes of limitation. Methods referred to but not explicitly described in the disclosure and these examples are reported in the scientific literature and are well known to those skilled in the art.

### Example 1. Sample Preparation

Distilled monoacylgycerols (MAG's) and anionic surfactant were provided by Danisco (Kansas, MO). They included Grinsted® sodium steaoryl lactylate (SSL) P55 anionic surfactant, and Dimodan® HS K-A (10% monopalmitin, 90% monostearin). Sodium hydroxide (2N NaOH) was obtained from Fischer (St. Louis, MO), vegetable oils (corn, canola, sunflower, soybean, peanut) were purchased in a local supermarket, and deionized water was of milliQ grade.

A 10% (w/w) stock of MAG in vegetable oil - all oils performed equally well - was prepared by melting 10g of the solid MAG (m.p. ∼73°C) and 500mg of the stearic acid or SSL powder in 89.5g of oil at 85°C for 30 minutes and cooled to 75°C. Appropriate volume fractions of 75°C alkaline deionized water (5 drops of 2N NaOH in 100mL), in the range 20% to 70% (v/v), were then added to the MAG-oil stock in a glass bowl heated to 75°C. The material was mixed with the aid of an electric hand mixer until a macroscopically homogeneous white paste was obtained, and then allowed to set undisturbed at room temperature (22°C). The material set almost immediately. For 100mL batches, setting was complete within 30 minutes. The mixture preferably contains at least 4% (w/w) distilled monoglyceride for proper gel formation and stability.

### Example 2. Dynamic Shear Rheology

Dynamic rheological measurements were carried out with a TA Instruments AR2000 rheometer (TA Instruments, New Castle, DE, USA) at 20°C. Approximately 3g of monoglyceride gels were gently spread on the temperature-controlled (Peltier element) rheometer base. A 60mm flat acrylic plate was lowered onto this film until a gap size of 1 mm was attained. This was immediately followed by strain sweeps from to 0.003% to 0.80% shear strain at a frequency of 1Hz. The increase in strain was logarithmic with a sampling frequency of 10 points per decade. Four samples were analyzed for each mixture and the average and standard deviation reported. At least three separate sets of experiments were conducted. The results of an exemplary experiment are shown in Figure 6.

### Example 3. Polarized Light Microscopy

Images were acquired using a Leica DM RXA2 upright microscope (Leica Microsystems AG, Bannockburn, IL, USA) equipped with a Retiga 1300 monochrome camera (QImaging, Burnaby, B.C., Canada). Three samples of each mixture were gently spread under a coverslip within the first 10 minutes of setting and examined using a 40X objective in polarization mode. Magnification bars and labels were added using Adobe Photoshop 5.5. At least three separate sets of experiments were conducted. Examples of photomicrographs can be seen in Figures 1, 2, 3 and 7.

### Example 4. Powder X-ray diffraction

Monoglyceride gel material was smeared between two pieces of Kapton^{™} tape forming the walls of a custom sample holder. This holder was then placed in an x-ray diffractometer comprised of a Huber four circle goniometer and Nonius sealed tube x-ray source with copper target. All measurements were taken using a scintillation point detector at room temperature. The Lithium fluoride monochromator was set to select the Cu K-alpha1 line (wavelength = 1.54 Angstroms). The angular resolution of the spectrometer was 0.1 deg. At least three separate sets of experiments were conducted. Results of exemplary experiments are shown in Figures 4 and 5.

### Example 5. Confocal Laser Scanning Microscopy

Image volumes through a depth of 18 micrometers were acquired using a Leica TCS SP II confocal laser scanning microscope (Leica Microsystems Heidelberg GmbH, Heidelburg, Germany), a Leica DM IRBE Inverted light microscope, a 40x, NA 1,25 Oil Immersion Objective and both UV and Argon Lasers. Coumarin images were obtained using the UV laser, 364 nm excitation, and emission between 425-475 nm. Nile Red images were acquired using the Argon laser, 488 nm excitation, and emission between 600-750 nm. The dye concentrations used for coumarin and nile red were 0.0025% (w/w) in either the aqueous phase (coumarin), or oil phase (nile red). Image stacks were then deconvolved using Autoquant's (Watervliet, NY) Blind Deconvolution software and projections. Magnification bars and labels were added using Adobe Photoshop 5.5. At least three separate sets of experiments were conducted. Results of exemplary experiments are shown in Figures 2 and 3.

### Example 6. Manufacture of a Whipped Topping

A 10% (w/w) stock of monoglyceride in canola oil with 0.5% SSL was heated to 80°C and thoroughly mixed. An aqueous solution of deionized water with 10 drops of 10N NaOH, 25% (w/w) sugar (sucrose), containing 0.01% to 1%, preferably 0.05% to 0.1 % (w/w) of one or more polysaccharides (for example hydroxypropylcellulose or guar gum) was also heated to 85°C. The solutions were allowed to cool to 75°C and mixed together. The samples were gently mixed for one minute and sheared while hot, using a hand-held household mixer (Braun) for 30 seconds until a homogenous white soft, fluffy material was obtained. The mixture was then cooled to 60°C and placed in the metal bowl of a Hobbart mixer cooled to 10°C. This mixture was then whipped while cooling to incorporate air. Whipping for approximately 5 minutes leads to a reduction in density from ∼1.0 g/mL to 0.2-0.5g/mL. The foam was then stored at both refrigeration and room temperatures. The resulting product has the taste and texture of a whipped dairy topping similar to whipped cream. Figure 7 is a micrograph of an exemplary topping of the invention.

### Example 7. Manufacture of a Margarine-like spread.

A 10% (w/w) stock of MAG in vegetable oil was prepared by melting 10g of solid MAG in oil. For some batches an artificial flavor was added to the oil phase. An aqueous phase comprising alkaline deionized water and salt was prepared. In different batches, different amounts of salt from 0.05% to 5% were added. For a particular batch, an aqueous phase containing 0.5% salt was heated to about 75°C. The melted 10% MAG in oil solution (oil phase) was also maintained at about 75°C. The oil phase was then added to the aqueous phase and mixed.

## Claims

1. A process for the preparation of a cellular solid, said process comprising the steps of:
a. preparing an oil phase solution of about 3-40% (w/w) surfactant in oil, wherein the surfactant comprises an ionic and a non-ionic surfactant, by heating the solution to a temperature at which the surfractant melts in the oil;
b. preparing a heated aqueous phase solution by heating the solution to about the temperature of the heated oil phase solution according to a.);
c. combining the aqueous phase solution and the oil phase solution to form an oil/surfactant/aqucous composition;
d. mixing the composition; and
e. allowing the composition to cool, wherein the surfactant crystallizes upon cooling to form a cellular solid.

2. A process according to claim 1 wherein the oil phase solution comprises about 5% to 15% (w/w) of surfactant.

3. A process according to claim 1, wherein the aqueous phase solution is alkaline, deionized or distilled water.

4. A process according to claim 1, wherein the aqueous phase solution comprises an additive selected from the group consisting of a polysaccharide, protein, vitamin, salt, flavoring, sugar, spice and combinations thereof:

5. A process according to claim 1 wherein the oil/surfactant/aqueous composition comprises about 10% to 90% water.

6. A process according to claim 5 wherein the composition comprises about 20% to 80% water.

7. A process according to claim 6 wherein the composition comprises about 40% to 60% water.

8. Process according to claim 1, wherein the oil is a vegetable oil, a fish oil, an algae oil or an animal oil.

9. Process according to claim 8, wherein the oil is a vegetable oil.

10. Process according to claim 8, wherein the vegetable oil is selected from the group consisting of corn oil, canola oil, rapeseed oil, hazelnut oil, sunflower oil, safflower oil, soybean oil, peanut oil, olive oil, flaxseed oil, and rice bran oil.

11. Process according to claim 1 comprising the further step of whipping the composition.

12. Process according to claim 11 wherein the composition is whipped while it is setting upon cooling.

13. Process according to claim 1 comprising the further step of adding an additive after the oil phase and the aqueous phase are combined.

14. A process according to claim 13 wherein the additive is selected from the group consisting of a flavoring, salt, vitamin, protein, polysaccharide and spice.

15. Process according to claim 13 wherein the additive is added while the composition is cooling.

16. A cellular solid prepared according to the process of claim 1.

17. A cellular solid according to claim 16 comprising condensed crystallized surfactant cell walls.

18. A cellular solid according to claim 16 wherein the non-ionic surfactant is selected from the group consisting of monoglycerides, diglycerides, poly-glycerol esters, non-ionic phospholipids and mixtures thereof.

19. A cellular solid according to claim 16 comprising at least 3% w/w of the non-ionic surfactant.

20. A cellular solid according to claim 19 comprising about 3% to 10% w/w of the non-ionic surfactant.

21. A cellular solid according to claim 20 comprising about 4% to 8% w/w of the non-ionic surfactant.

22. A cellular solid accordi ng to claim 16, wherein the ratio of non-ionic surfactant to ionic surfactant is about 10:1 to 30:1, preferably 20:1 w/w.

23. A cellular solid according to claim 16 wherein the ionic surfactant is selected from the group consisting of cationic phospholipids, cationic non-fatty carboxylic acid esters, anionic lactylated fatty acid salts, anionic phospholipids, anionic non-fatty carboxylic esters, fatty acids and fatty acid metal salts.

24. A cellular solid according to claim 23 wherein the fatty acid or fatty acid metal salt is stearic acid or sodium stearate.

25. A cellular solid according to claim 23 wherein the fatty acid salt is sodium stearoyl lactylate (SSL).

26. A cellular solid according to claim 16 comprising about 3% to 10% monoglyceride, about 0.2% to 0.35% anionic surfactant, and the mass balance remaining comprising 20% to 80% w/w oil and 20% to 80% water.

27. A cellular solid according to claim 16 comprising 40% to 60% oil and 40% to 60% water.

28. A food product comprising a cellular solid prepared according to the process of claim 1.

29. A food product according to claim 28 wherein the cellular solid comprises crystallized surfactant cell walls.

30. A food product according to claim 28 wherein the non-ionic surfactant is selected from the group consisting of monoglycerides, diglycerides, poly-glycerol esters, non-ionic phospholipids and mixtures thereof.

31. A food product according to claim 28 comprising at least 3% w/w of the non-ionic surfactant.

32. A food product according to claim 31 comprising about 4 to 8% w/w of the non-ionic surfactant.

33. A food product according to claim 28, wherein the ratio of non-ionic surfactant to ionic surfactant is about 20:1 w/w.

34. A food product according to claim 28 wherein the anionic surfactant is selected from the group consisting of cationic phospholipids, cationic non-fatty carboxylic acid esters, anionic lactylated fatty acid salts, anionic phospholipids, anionic non-fatty carboxylic esters, fatty acids and their metal salts.

35. A food product according to claim 34 wherein the anionic fatty acid salt is sodium stearyl lactylate (SSL) stearic acid or sodium stearate.

36. A food product according to claim 28 comprising about 3 to 10% monoglyceride, about 0.2 to 0.35% anionic surfactant, and the mass balance remaining comprising 20 to 80% w/w oil and 20 to 80% water.

37. A food product according to claim 36 comprising 40 to 60% oil and 40% to 60% water.

38. A food product according to claim 28 comprising a spread, a topping, pudding, cookie, pastry, pie, confection, shake, frozen dessert, cream-like product or dip.

39. A whipped topping comprising a cellular solid as defined in claim 16, and air pockets.

40. A whipped topping according to claim 39 comprising a sweetener selected from the group consisting of sugar, sucralose and aspartame.

41. A whipped topping according to claim 39 comprising sugar.

42. A whipped topping according to claim 41 comprising at least 5% sugar.

43. A whipped topping according to clai m 42 comprising at least 20% sugar.

44. A spread comprising a cellular solid as defined in claim 16.

45. A spread according to claim 44, comprising 0.05% to 5% w/w salt.

46. A spread according to claim 44, comprising 0.1% to 5% w/w salt.

## Patentansprüche

1. Verfahren für die Zubereitung eines zellulären Feststoffes, wobei das Verfahren folgende Schritte umfasst:
a. Zubereiten einer Ölphaselösung von etwa 3 - 40 % (w/w) Tensid in Öl, wobei das Tensid ein ionisches und ein nichtionisches Tensid umfasst, durch Erwärmen der Lösung auf eine Temperatur, bei welcher das Tensid in dem Öl schmilzt;
b. Zubereiten einer erwärmten Wässrige-Phase-Lösung durch Erwärmen der Lösung auf etwa die Temperatur der erwärmten Ölphaselösung gemäß a.;
c. Kombinieren der Wässrige-Phase-Lösung und der Ölphaselösung, um eine Öl-/Tensid-/wässrige Zusammensetzung zu bilden;
d. Mischen der Zusammensetzung und
e. Abkühlenlassen der Zusammensetzung, wobei das Tensid beim Abkühlen kristallisiert, um einen zellulären Feststoff zu bilden.

2. Verfahren gemäß Anspruch 1, wobei die Ölphaselösung etwa 5 % bis 15% (w/w) Tensid umfasst.

3. Verfahren gemäß Anspruch 1, wobei die Wässrige-Phase-Lösung alkalisches, entionisiertes oder destilliertes Wasser ist.

4. Verfahren gemäß Anspruch 1, wobei die Wässrige-Phase-Lösung einen Zusatzstoff umfasst, der aus der Gruppe ausgewählt ist, die aus einem Polysaccharid, Protein, Vitamin, Salz, Geschmacksstoff, Zucker, Gewürz und Kombinationen daraus besteht.

5. Verfahren gemäß Anspruch 1, wobei die Öl-/Tensid-/wässrige Zusammensetzung etwa 10 % bis 90 % Wasser umfasst.

6. Verfahren gemäß Anspruch 5, wobei die Zusammensetzung etwa 20 % bis 80 % Wasser umfasst.

7. Verfahren gemäß Anspruch 6, wobei die Zusammensetzung etwa 40 % bis 60 % Wasser umfasst.

8. Verfahren gemäß Anspruch 1, wobei das Öl ein pflanzliches Öl, ein Fischöl, ein Algenöl oder ein tierisches Öl ist.

9. Verfahren gemäß Anspruch 8, wobei das Öl ein pflanzliches Öl ist.

10. Verfahren gemäß Anspruch 8, wobei das pflanzliche Öl aus der Gruppe ausgewählt ist, die aus Maisöl, Canolaöl, Rapsöl, Haselnussöl, Sonnenblumenöl, Distelöl, Sojaöl, Erdnussöl, Olivenöl, Leinöl und Reiskleieöl besteht.

11. Verfahren gemäß Anspruch 1, weiterhin den Schritt umfassend, die Zusammensetzung zu schlagen.

12. Verfahren gemäß Anspruch 11, wobei die Zusammensetzung geschlagen wird, während sie sich beim Abkühlen verfestigt.

13. Verfahren gemäß Anspruch 1, den weiteren Schritt umfassend, einen Zusatzstoff hinzuzufügen, nachdem die Ölphase und die wässrige Phase kombiniert sind.

14. Verfahren gemäß Anspruch 13, wobei der Zusatzstoff aus der Gruppe ausgewählt ist, die aus einem Geschmacksstoff, Salz, Vitamin, Protein, Polysaccharid und Gewürz besteht.

15. Verfahren gemäß Anspruch 13, wobei der Zusatzstoff hinzugefügt wird, während die Zusammensetzung abkühlt.

16. Zellulärer Feststoff, der nach dem Verfahren gemäß Anspruch 1 zubereitet ist.

17. Zellulärer Feststoff gemäß Anspruch 16, der kondensierte kristallisierte Tensid-Zellwände umfasst.

18. Zellulärer Feststoff gemäß Anspruch 16, wobei das nichtionische Tensid aus der Gruppe ausgewählt ist, die aus Monoglyceriden, Diglyceriden, Polyglycerinestern, nichtionischen Phospholipiden und Mischungen daraus besteht.

19. Zellulärer Feststoff gemäß Anspruch 16, der wenigstens 3 % (w/w) des nichtionischen Tensids umfasst.

20. Zellulärer Feststoff gemäß Anspruch 19, der etwa 3 % bis 10 % (w/w) des nichtionischen Tensids umfasst.

21. Zellulärer Feststoff gemäß Anspruch 20, der etwa 4 % bis 8 % (w/w) des nichtionischen Tensids umfasst.

22. Zellulärer Feststoff gemäß Anspruch 16, wobei das Verhältnis von nichtionischem Tensid zu ionischem Tensid etwa 10:1 bis 30:1, bevorzugt 20:1 (w/w) ist.

23. Zellulärer Feststoff gemäß Anspruch 16, wobei das ionische Tensid aus der Gruppe ausgewählt ist, die aus kationischen Phospholipiden, kationischen Nichtfett-Carbonsäureestern, anionischen lactylierten Fettsäuresalzen, anionischen Phospholipiden, anionischen Nichtfett-Carbonestern, Fettsäuren und Fettsäuremetallsalzen besteht.

24. Zellulärer Feststoff gemäß Anspruch 23, wobei die Fettsäure oder das Fettsäuremetallsalz Stearinsäure oder Natriumstearat ist.

25. Zellulärer Feststoff gemäß Anspruch 23, wobei das Fettsäuresalz Natriumstearoyllactylat (SSL) ist.

26. Zellulärer Feststoff gemäß Anspruch 16, der etwa 3 % bis 10 % Monoglycerid, etwa 0,2 % bis 0,35 % anionisches Tensid umfasst, und wobei die verbleibende Massenbilanz 20 % bis 80 % (w/w) Öl und 20% bis 80 % Wasser umfasst.

27. Zellulärer Feststoff gemäß Anspruch 16, der 40 % bis 60 % Öl und 40 % bis 60 % Wasser umfasst.

28. Nahrungsmittelprodukt, das einen zellulären Feststoff umfasst, der gemäß dem Verfahren aus Anspruch 1 zubereitet ist.

29. Nahrungsmittelprodukt gemäß Anspruch 28, wobei der zelluläre Feststoff kristallisierte Tensid-Zellwände umfasst.

30. Nahrungsmittelprodukt gemäß Anspruch 28, wobei das nichtionische Tensid aus der Gruppe ausgewählt ist, die aus Monoglyceriden, Diglyceriden, Polyglycerinestern, nichtionischen Phospholipiden und Mischungen daraus besteht.

31. Nahrungsmittelprodukt gemäß Anspruch 28, das wenigstens 3 % (w/w) des nichtionischen Tensids umfasst.

32. Nahrungsmittelprodukt gemäß Anspruch 31, das etwa 4 bis 8 % (w/w) des nichtionischen Tensids umfasst.

33. Nahrungsmittelprodukt gemäß Anspruch 28, wobei das Verhältnis von nichtionischem Tensid zu ionischem Tensid etwa 20:1 (w/w) ist.

34. Nahrungsmittelprodukt gemäß Anspruch 28, wobei das anionische Tensid aus der Gruppe ausgewählt ist, die aus kationischen Phospholipiden, kationischen Nichtfett-Carbonsäureestern, anionischen lactylierten Fettsäuresalzen, anionischen Phospholipiden, anionischen Nichtfett-Carbonestern, Fettsäuren und ihren Metallsalzen besteht.

35. Nahrungsmittelprodukt gemäß Anspruch 34, wobei das anionische Fettsäuresalz Natriumstearoyllactylat (SSL), Stearinsäure oder Natriumstearat ist.

36. Nahrungsmittelprodukt gemäß Anspruch 28, das etwa 3 bis 10% Monoglycerid, etwa 0,2 bis 0,35 % anionisches Tensid umfasst, und wobei die verbleibende Massenbilanz 20 bis 80 % (w/w) Öl und 20 % bis 80 % Wasser umfasst.

37. Nahrungsmittelprodukt gemäß Anspruch 36, das 40 bis 60 % Öl und 40 % bis 60 % Wasser umfasst.

38. Nahrungsmittelprodukt gemäß Anspruch 28, das einen Brotaufstrich, eine Garnierung, Pudding, Keks, Gebäck, Kuchen, Konfekt, Mixgetränk, gefrorenes Dessert, sahneartiges Produkt oder Soße umfasst.

39. Geschlagene Garnierung, die einen zellulären Feststoff gemäß Anspruch 16 und Lufteinschlüsse umfasst.

40. Geschlagene Garnierung gemäß Anspruch 39, die ein Süßmittel umfasst, das aus der Gruppe ausgewählt ist, die aus Zucker, Sucralose und Aspartam besteht.

41. Geschlagene Garnierung gemäß Anspruch 39, die Zucker umfasst.

42. Geschlagene Garnierung gemäß Anspruch 41, die wenigstens 5 % Zucker umfasst.

43. Geschlagene Garnierung gemäß Anspruch 42, die wenigstens 20 % Zucker umfasst.

44. Brotaufstrich, der einen zellulären Feststoff gemäß Anspruch 16 umfasst.

45. Brotaufstrich gemäß Anspruch 44, der 0,05 % bis 5 % (w/w) Salz umfasst.

46. Brotaufstrich gemäß Anspruch 44, der 0,1% bis 5 % (w/w) Salz umfasst.

## Revendications

1. Un processus pour la préparation d'un solide cellulaire, ledit processus comprenant les étapes de:
a. préparer une solution de phase huileuse d'environ 3-40% (w/w) surfactants dans l'huile où le surfactant comprend un surfactant ionique et non ionique, en chauffant la solution à une température à laquelle le surfactant fond dans l'huile ;
b. préparer une solution de phase aqueuse chauffée par chauffage d'une solution à environ la température de la solution de phase huileuse chauffée selon a. ;
c. combiner la solution de phase aqueuse et la solution de phase huileuse pour former une composition aqueuse/surfactant/huileuse ;
d. mélanger la composition ; et
e. permettre à la composition de refroidir, où le surfactant cristallise sous refroidissement pour former un solide cellulaire.

2. Un processus selon la revendication 1 où la solution de phase huileuse comprend environ 5% à 15% (w/w) de surfactants.

3. Un processus selon la revendication 1 où la solution de phase aqueuse est de l'eau alcaline, déionisée ou distillée.

4. Un processus selon la revendication 1 où la solution de phase aqueuse comprend un additif sélectionné parmi le groupe constitué de polysaccharide, protéine, vitamine, sel, aromatisant, sucre, épice et combinaison de ceux-ci.

5. Un processus selon la revendication 1 où la composition aqucuse/surfactant/huileuse comprend environ 10% à 90% d'eau.

6. Un processus selon la revendication 5 où la composition comprend environ 20% à 80% d'eau.

7. Un processus selon la revendication 5 où la composition comprend environ 40% à 60% d'eau.

8. Processus selon la revendication 1 où l'huile est une huile végétale, une huile de poisson, une huile d'algue ou une huile animale.

9. Processus selon la revendication 8 où l'huile est une huile végétale.

10. Processus selon la revendication 8 où l'huile végétale est sélectionnée parmi le groupe constitué d'huile de mais, huile de canola, huile de colza, huile de tournesol, huile de carthame, huile de soja, huile d'arachide, huile d'olive, huile de lin et huile de riz.

11. Processus selon la revendication 1 comprenant de plus l'étape de fouetter la composition.

12. Processus selon la revendication 11 où la composition est fouettée tandis qu'elle se solidifie sous refroidissement.

13. Processus selon la revendication 1 comprenant de plus l'étape d'ajouter un additif après que la phase huileuse et la phase aqueuse sont combinées.

14. Un processus selon la revendication 13 où l'additif est sélectionné parmi le groupe constitué de aromatisant, sel, vitamine, protéine, polysaccharide et épice.

15. Processus selon la revendication 13 où l'additif est ajouté tandis que la composition est refroidit.

16. Un solide cellulaire préparé selon le processus de la revendication 1.

17. Un solide cellulaire selon la revendication 16 comprenant des parois cellulaires de surfactants cristallisées condensées.

18. Un solide cellulaire selon la revendication 16 où le surfactant non ionique est sélectionné parmi le groupe constitué de monoglycérides, diglycérides, esters polyglycéroliques, phospholipides non ioniques et mélanges de ceux-ci.

19. Un solide cellulaire selon la revendication 16 comprenant au moins 3% w/w du surfactant non ionique.

20. Un solide cellulaire selon la revendication 19 comprenant environ 3% à 10% w/w du surfactant non ionique.

21. Un solide cellulaire selon la revendication 20 comprenant environ 4% à 8% w/w du surfactant non ionique.

22. Un solide cellulaire selon la revendication 16 où le ratio de surfactant non ionique par rapport au surfactant ionique est d'environ 10:1 à 30:1, de préférence 20:1 w/w.

23. Un solide cellulaire selon la revendication 16 où le surfactant ionique est sélectionné parmi le groupe constitué de phospholipides cationiques, esters d'acide carboxylique non gras cationiques, sels d'acide gras lactylés anioniques, phospholipides anioniques, esters d'acide carboxylique non gras anioniques, acides gras et sels métalliques d'acide gras.

24. Un solide cellulaire selon la revendication 23 où l'acide gras ou le sel métallique d'acide gras est un acide stéarique ou un stéarate de sodium.

25. Un solide cellulaire selon la revendication 23 où le sel d'acide gras est un stérayl lactylate de sodium (SSL).

26. Un solide cellulaire selon la revendication 16 comprenant environ 3% à 10% de monoglycéride, environ 0,2% à 0,35% de surfactant anionique et le bilan massique restant comprenant 20% à 80% w/w d'huile et 20% à 80% d'eau.

27. Un solide cellulaire selon la revendication 16 comprenant 40% à 60% d'huile et 40% à 60% d'eau.

28. Un produit alimentaire comprenant un solide cellulaire préparé selon le processus de la revendication 1.

29. Un produit alimentaire selon la revendication 28 où le solide cellulaire comprend de parois cellulaires de surfactants cristallisées.

30. Un produit alimentaire selon la revendication 28 où le surfactant non ionique est sélectionné parmi le groupe constitué de monoglycérides, diglycérides, esters polyglycéroliques, phospholipides non ioniques et mélange de ceux-ci.

31. Un produit alimentaire selon la revendication 28 comprenant au moins 3% w/w du surfactant non ionique.

32. Un produit alimentaire selon la revendication 31 comprenant environ 4% à 8% w/w du surfactant non ionique.

33. Un produit alimentaire selon la revendication 28 où le ration de surfactant non ionique par rapport au surfactant ionique est d'environ 20:1 w/w.

34. Un produit alimentaire selon la revendication 28 où le surfactant anionique est sélectionné parmi le groupe constitué de phospholipides cationiques, esters d'acide carboxylique non gras cationiques, sels d'acide gras lactylés anioniques, phospholipides anioniques, esters d'acide carboxylique non gras anioniques, acides gras et sels métalliques d'acide gras.

35. Un produit alimentaire selon la revendication 34 où le sel d'acide gras est un stérayl lactylate de sodium (SSL), un acide stéarique ou un stéarate de sodium..

36. Un produit alimentaire selon la revendication 28 comprenant environ 3% à 10% de monoglycéride, environ 0,2% à 0,35% de surfactant anionique et le bilan massique restant comprenant 20% à 80% w/w d'huile et 20% à 80% d'eau.

37. Un solide cellulaire selon la revendication 16 comprenant 40% à 60% d'huile et 40% à 60% d'eau.

38. Un produit alimentaire selon la revendication 28 comprenant un produit à tartiner, une garniture, une crème dessert, un biscuit, une pâtisserie, une tarte, une confiserie, une boisson frappée, un dessert glacé, un produit comme de la crème ou dip.

39. Une garniture fouettée comprenant un solide cellulaire comme défini en revendication 16 et des poches d'air.

40. Une garniture fouettée selon la revendication 39 comprenant un édulcorant sélectionné parmi le groupe constitué de sucre, sucralose, et aspartame.

41. Une garniture fouettée selon la revendication 39 comprenant du sucre.

42. Une garniture fouettée selon la revendication 41 comprenant au moins 5% de sucre.

43. Une garniture fouettée selon la revendication 42 comprenant au moins 20% de sucre.

44. Un produit à tartiner comprenant un solide cellulaire comme défini en revendication 16.

45. Un produit à tartiner selon la revendication 44 comprenant 0,05% à 5% w/w de sel.

46. Un produit à tartiner selon la revendication 44 comprenant 0,1 % à 5% w/w de sel.
